# EUROPEAN PATENT APPLICATION

(11) **EP 4 564 068 A1**
(43) Date of publication of application: **04.06.2025**
(21) Application number: 23863534.6
(22) Date of filing: 07.09.2023
(51) Int. Cl.: G02B 6/13, G02B 6/12

(54) **APPARATUS AND METHOD FOR MANUFACTURING OPTICAL WIRE**

(30) Priority: 08.09.2022 KR 20220114418; 06.09.2023 KR 20230118102
(71) Applicant: Lessengers Inc., Pohang-si, Gyeongsangbuk-do 37668 (KR)
(72) Inventor: KIM, Chongcook, Pohang-Si, Gyeongsangbuk-do 37668 (KR); KIM, Taeyong, Pohang-si, Gyeongsangbuk-do 37668 (KR)
(74) Representative: Fuchs Patentanwälte Partnerschaft mbB
(86) International application number: PCT/KR2023/013440
(87) International publication number: WO 2024/054070

(57) **Abstract**

Provided are an apparatus and method for manufacturing an optical wire. The apparatus includes a wire forming module configured to form an optical wire for optically coupling a first point to a second point, an image acquisition module configured to acquire an image of the optical wire, a curing module configured to cure the optical wire, and a control module. The control module checks a shape and position of the optical wire through the image acquired by the image acquisition module and outputs a control signal to the curing module so that ultraviolet (UV) light is emitted to the optical wire.

## Description

### CROSS-REFERENCE TO RELATED APPLICATION

This application claims priority to and the benefit of Korean Patent Applications No. 10-2022-0114418, filed on September 08, 2022 and No. 10-2023-0118102, filed on September 06, 2023, the disclosure of which is incorporated herein by reference in its entirety.

### BACKGROUND

### 1. Field of the Invention

The present invention relates to an apparatus and method for manufacturing an optical wire.

### 2. Discussion of Related Art

In photonic chip packaging employing an optical system, one or more lenses are disposed between apertures of photonic chips to optically couple the photonic chips to each other with minimum loss caused by divergence of light. Here, one or more prisms (or mirrors) may be added according to an angle between the apertures of the photonic chips.

When an alignment error occurs in photonic chip packaging employing an optical system including a lens and/or prism, photonic packaging loss is significant. Accordingly, optical alignment at the level of several micrometers is necessary between apertures of two photonic chips and optical systems.

However, since precise optical alignment involves highly precise design technology and minute chip/optical fiber arrangement technology, a packaging cost increases, and mass production is difficult.

### SUMMARY OF THE INVENTION

The present invention is directed to providing an optical wire manufacturing apparatus and method for optical coupling without active alignment.

The present invention is also directed to providing an apparatus and method for preventing shape deformation by curing an optical wire.

Objectives to be achieved by embodiments of the present invention are not limited thereto, and solutions described below and purposes or effects that may be found in embodiments may also be included in the objectives.

According to an aspect of the present invention, there is provided an apparatus for manufacturing an optical wire, the apparatus including a wire forming module configured to form an optical wire for optically coupling a first point to a second point, an image acquisition module configured to acquire an image of the optical wire, a curing module configured to cure the optical wire, and a control module. The control module checks a shape and position of the optical wire through the image acquired by the image acquisition module and outputs a control signal to the curing module so that ultraviolet (UV) light is emitted to the optical wire.

The wire forming module may include a solution discharge module and a first drive module configured to move the solution discharge module. The solution discharge module may discharge a polymer solution on the first point and then may be moved to the second point by the first drive module to form the optical wire between the first point and the second point.

The optical wire may include a first link portion formed at the first point, a second link portion formed at the second point, and a line portion connected between the first link portion and the second link portion.

The solution discharge module may form the first link portion by discharging the polymer solution on the first point, form the line portion thinner than the first link portion while moving to the second point, and form the second link portion at the second point.

The image acquisition module may include a camera configured to acquire shape information of the first link portion, the line portion, and the second link portion.

The control module may determine whether the shape information of the optical wire acquired through the camera matches predetermined shape range and position information in a memory.

The image acquisition module and the curing module may be combined as a combination module. The combination module may move the image acquisition module and the curing module along a predetermined path, the image acquisition module may acquire the shape information of the optical wire while moving along the predetermined path, and the curing module may cure the optical wire while moving along the predetermined path.

The combination module may include an integrated housing including a first spatial portion extending to a certain length from a first surface facing the optical wire, a second spatial portion connected to the first spatial portion and accommodating the camera, and a third spatial portion connected to the first spatial portion and accommodating a light source of the curing module, an optical filter configured to reflect or transmit light incident on the camera through the first spatial portion and reflect or transmit light emitted from the light source to the first surface, and a second drive module configured to move the integrated housing along the predetermined path.

According to another aspect of the present invention, there is provided a method of manufacturing an optical wire, the method including forming an optical wire between a first point and a second point, acquiring shape information and position information of the optical wire, and emitting UV light to the optical wire to cure the optical wire.

The optical wire may be simultaneously inspected and cured while a camera and a light source move together in a longitudinal direction of the optical wire.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a diagram illustrating an apparatus for manufacturing an optical wire according to an exemplary embodiment of the present invention;
FIG. 2 is a diagram illustrating a position in advance where an optical wire will be formed and the shape of an optical wire;
FIG. 3 is a diagram illustrating a state in which an optical wire is formed on a first optical device;
FIG. 4 is a diagram illustrating a process of forming an optical wire between the first optical device and a second optical device;
FIG. 5 is a diagram illustrating a process of inspecting and curing the optical wire;
FIG. 6 is a diagram illustrating an image acquisition module and a curing module according to an exemplary embodiment of the present invention;
FIG. 7A is a diagram illustrating a process in which light emitted from a lighting module passes through the optical wire and is collected by the image acquisition module;
FIG. 7B is an image of the optical wire acquired by the image acquisition module;
FIG. 8A is a diagram illustrating a process of matching an image acquired by the image acquisition module to a prestored image;
FIG. 8B is a diagram illustrating a state in which an image acquired by the image acquisition module does not match a prestored image;
FIG. 9 is a diagram illustrating a process of curing the optical wire by emitting ultraviolet (UV) light to the optical wire;
FIG. 10 is a diagram illustrating a state of emitting UV light while acquiring images in real time through a camera;
FIG. 11A is a diagram illustrating an optical module in which two optical coupling bodies formed on the same substrate are connected through an optical wire;
FIG. 11B is a diagram illustrating an optical module in which an optical device and an optical waveguide receiving or outputting a light signal in different directions are connected through an optical wire;
FIG. 12 is a diagram illustrating an optical module in which two multi-channel optical devices formed on two different substrates are connected through a plurality of optical wires;
FIG. 13 is a diagram illustrating an optical module in which a plurality of multi-channel optical devices are connected through a plurality of optical wires;
FIG. 14 is a diagram illustrating an optical module in which a plurality of multi-channel optical devices are connected to an optical waveguide through a plurality of optical coupling wires;
FIG. 15 is a flowchart illustrating a method of manufacturing an optical coupling wire according to an exemplary embodiment of the present invention;
FIG. 16 is a flowchart illustrating a method of manufacturing an optical coupling wire according to another exemplary embodiment of the present invention; and
FIG. 17 is a flowchart illustrating a method of manufacturing an optical coupling wire according to still another exemplary embodiment of the present invention.

### DETAILED DESCRIPTION OF EXEMPLARY EMBODIMENTS

Since the present invention can be variously modified and have several embodiments, specific embodiments will be illustrated in the drawings and described. However, this is not intended to limit the present invention to the specific embodiments, and it is to be understood that the present invention includes all modifications, equivalents, and substitutions within the spirit and technical scope of the present invention.

Terms including ordinal numbers, such as "first," "second," etc., may be used for describing various components, but the components are not limited by the terms. The terms are only used for the purpose of distinguishing one component from another. For example, a second component may be named a first component without departing from the scope of the present invention, and a first component may likewise be named a second component. The term "and/or" includes any one or a combination of a plurality of related stated items.

When a first component is referred to as being "connected" or "coupled" to a second component, the first component may be directly connected or coupled to the second component, or an intermediate component may be therebetween. On the other hand, when a first component is referred to as being "directly connected" or "directly coupled" to a second component, there is no intermediate component therebetween.

Terminology used in this specification is used only for describing specific embodiments and is not intended to limit the present invention. The singular forms include the plural forms as well unless the context clearly indicates otherwise. In this specification, the terms "comprise," "comprising," "include," "including," "have," "having," etc. indicate the presence of features, integers, steps, operations, components, parts, or combinations thereof stated herein and do not preclude the possibility of presence or addition of one or more other features, integers, steps, operations, components, parts, or combinations thereof.

Unless otherwise defined, all terms including technical or scientific terms used herein have the same meaning as generally understood by those of ordinary skill in the art. Terms defined in generally used dictionaries are construed as having the same meaning as would be construed in the context of the related art. Unless defined clearly and apparently in this specification, the terms are not construed as having ideal or excessively formal meaning.

Hereinafter, exemplary embodiments of the present invention will be described in detail with reference to the accompanying drawings. Throughout the drawings, like reference numerals refer to like components, and duplicate descriptions thereof will be omitted.

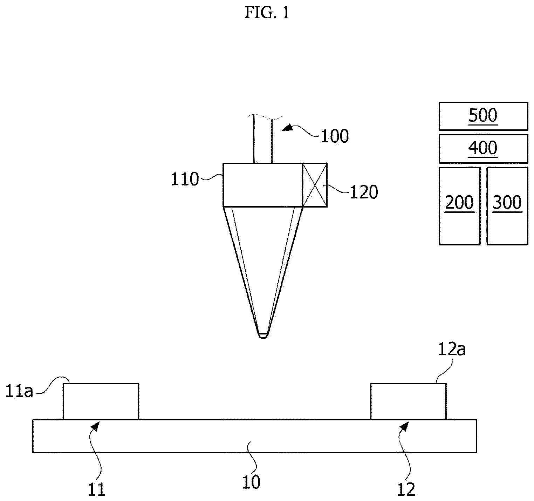

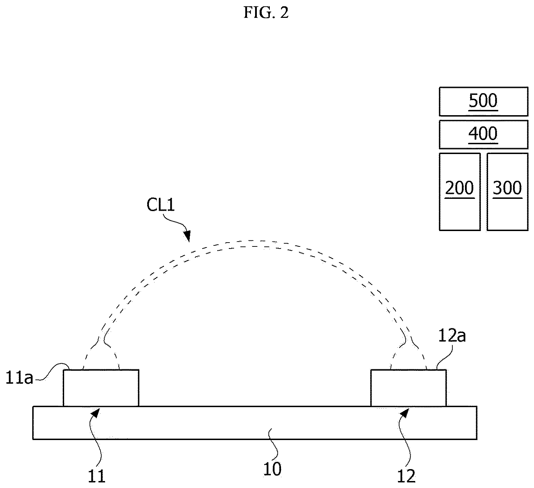

FIG. 1 is a diagram illustrating an apparatus for manufacturing an optical wire according to an exemplary embodiment of the present invention. FIG. 2 is a diagram illustrating a position in advance where an optical wire will be formed and the shape of the optical wire.

Referring to FIG. 1, the apparatus for manufacturing an optical wire according to the exemplary embodiment of the present invention includes a wire forming module 100 for forming an optical wire optically coupling a first point 11a and a second point 12a together which are spaced apart from each other, an image acquisition module 300 for acquiring an image of the optical wire, a curing module 200 for curing the optical wire, and a control module 500.

The wire forming module 100 may include a solution discharge module 110 that is charged with a polymer solution and discharges the polymer solution and a first drive module 120 that moves the solution discharge module 110 in a vertical direction and/or a horizontal direction.

The solution discharge module 110 may form an optical wire between a first point 11a of a first optical device 11 and a second point 12a of a second optical device 12 while being moved by the first drive module 120. The optical wire may be formed of a transparent material and optically connect the first optical device 11 and the second optical device 12.

Each of the first optical device 11 and the second optical device 12 disposed on a substrate 10 may include one or more apertures for outputting or receiving light. The first optical device 11 and the second optical device 12 may be various optical devices for emitting or receiving light such as a photonic integrated circuit (PIC) chip, an optical fiber, an optical coupler, a light-emitting diode (LED), a light-receiving diode, and the like.

Referring to FIG. 2, when a separation distance between the first optical device 11 and the second optical device 12 and the positions and heights of the first point 11a and the second point 12a are determined, a position at which the optical wire will be formed and an expected trajectory CL1 of the optical wire may be calculated. Accordingly, movement path coordinates of the solution discharge module 110 may be set.

The movement path coordinates may be stored in a separate memory by a user. The control module 500 may load the movement coordinates stored in the memory and apply an output signal to the first drive module 120.

However, the user may not directly set a setting value, and movement path coordinates may be automatically calculated by the control module 500 on the basis of an image. The control module 500 may extract edge information of the first optical device 11 and the second optical device 12 from the image captured by the image acquisition module 300 and calculate the positions of the first point 11a and the second point 12a. Subsequently, the control module 500 may generate movement path coordinates for forming the optical wire between the first point 11a and the second point 12a. As a configuration for automatically calculating movement path coordinates, various image processing techniques and pattern recognition techniques may be used.

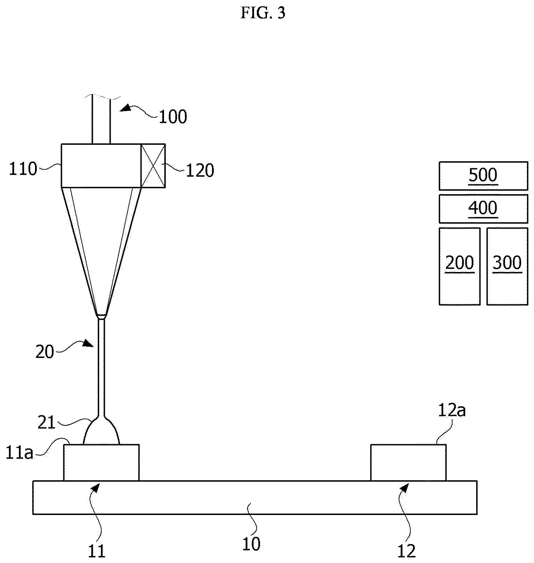

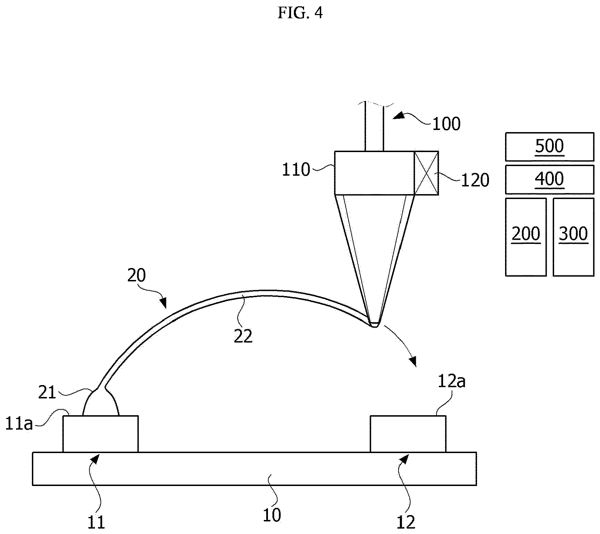

FIG. 3 is a diagram illustrating a state in which an optical wire is formed on a first optical device. FIG. 4 is a diagram illustrating a process of forming an optical wire between the first optical device and a second optical device.

Referring to FIG. 3, the solution discharge module 110 may approach the first optical device 11 and discharge the solution on the first point 11a to form a first link portion 21.

The first link portion 21 may have a half-oval shape with a certain curvature but is not necessarily limited thereto. The shape of the first link portion 21 may be variously modified depending on the amount and viscosity of discharged solution.

After the first link portion 21 is formed, the solution discharge module 110 may vertically ascend to form the optical wire 20. The diameter of the optical wire 20 may be adjusted according to the ascending speed of the solution discharge module 110 and the amount of discharged solution.

The optical wire 20 may be formed of a transparent material and configured in the shape of a single wire having one end and the other end. The constituent material of the optical wire 20 may form a meniscus, and any material cured by ultraviolet (UV) light may be selected.

As an example, the constituent material of the optical wire 20 may be polystyrene, polymethacrylic acid, polycarbonate, or the like. Also, perfluorinated compounds (PFCs), such as amorphous fluoropolymer (CYTOP) and the like, or epoxy, such as polyimide, SU-8, and the like, may be used.

In addition, the constituent material of the optical wire 20 may be an organic conductive polymer (π-conjugated polymer), of which electrical and optical properties can be adjusted through chemical doping.

The solvent of the optical wire solution may be a material that easily evaporates (a volatile material), and any material used in the corresponding technical field may be selected without limitations.

The solution discharge module 110 may be a micropipette but is not necessarily limited thereto. Any configuration for uniformly discharging a wire with a diameter of minute size (e.g., micrometer size) may be used without limitations.

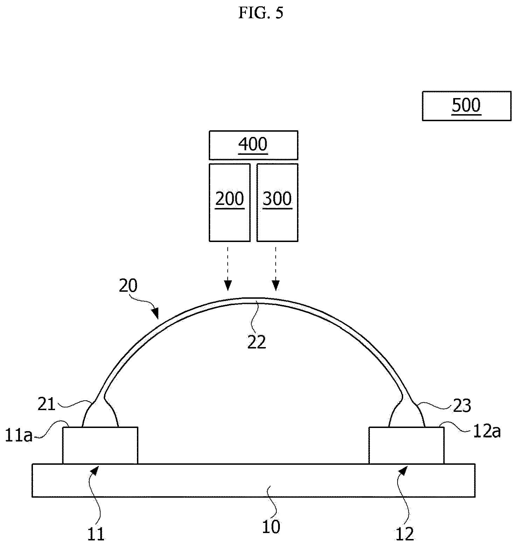

Referring to FIGS. 4 and 5, the solution discharge module 110 may move from the first optical device 11 toward the second optical device 12. Here, the optical wire 20 may extend to have an appropriate curvature and maintain bending stress at a level at which the inside or outside of the optical wire 20 is not physically damaged. Accordingly, optical loss in the optical wire 20 can be maintained at a tolerance or lower.

Subsequently, the solution discharge module 110 may descend to the second point 12a of the second optical device 12 to form the second link portion 23, thereby forming the optical wire 20 between the first optical device 11 and the second optical device 12.

The optical wire 20 may include the first link portion 21 formed at the first optical device 11, a second link portion 23 formed at the second optical device 12, and a line portion 22 connecting the first link portion 21 and the second link portion 23. The first link portion 21, the second link portion 23, and the line portion 22 may be consecutively formed of the same material.

The first point 11a of the first optical device 11 may be an emission surface from which light is emitted, and the second point 12a of the second optical device 12 may be an incidence surface on which light is incident. Accordingly, light emitted from the first point 11a may be effectively incident on the second point 12a through the optical wire 20. According to the exemplary embodiment, active alignment is unnecessary, and a plurality of optical devices can be optically coupled together at low costs.

When the optical wire 20 is completely formed, the image acquisition module 300 may capture an image of the optical wire 20. The control module 500 may extract acquired shape and position information of the optical wire 20 and control the curing module 200 so that UV light is emitted to the corresponding region. Various image processing techniques may be used for extracting shape and position information of the optical wire 20.

However, the present invention is not necessarily limited to this case, and the control module 500 may determine whether the shape and position of the optical wire 20 acquired by the image acquisition module 300 match predetermined shape and position information in the memory.

The memory (not shown) may store shape information and position information for the optical wire 20 to optically couple at least two optical devices without optical loss such as the shape of the first link portion 21, the diameter and curvature of the line portion 22, the shape of the second link portion 23, and the like.

Therefore, when the acquired shape and position of the optical wire 20 match the predetermined shape and position information in the memory, the control module 500 may output a control signal to the curing module 200 so that UV light is emitted to the optical wire 20.

When the optical wire 20 is completely formed, the solvent is volatilized. Accordingly, the optical wire 20 solidifies to a certain degree but is not cured yet. Therefore, when the optical wire 20 is determined to match the predetermined shape, UV light may be emitted to completely cure the polymer. In other words, the polymer of the optical wire 20 according to the exemplary embodiment may be a UV-cured polymer. However, the polymer of the optical wire 20 is not necessarily limited thereto and may be a thermosetting polymer. In this case, the curing module 200 may include a heater for applying heat.

The optical wire 20 that has not been completely cured may be easily deformed due to shrinking over time. As an example, about 10 seconds after the optical wire 20 is formed, deformation may occur in the initially formed shape. In this case, optical coupling performance may be degraded. Therefore, it may be important to cure the optical wire 20 before the shape of the optical wire 20 is deformed.

According to the exemplary embodiment, the control module 500 may detect the shape and position of the optical wire 20 from the image acquired by the image acquisition module 300 and cure the optical wire 20 through the curing module 200 to complete curing before deformation occurs.

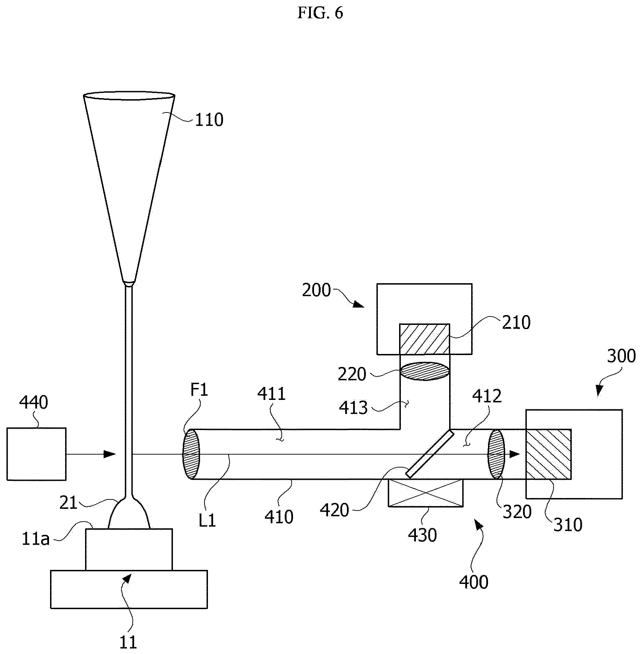

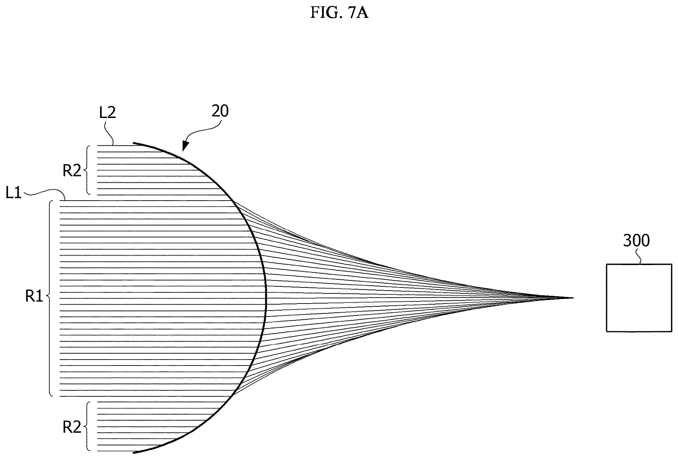

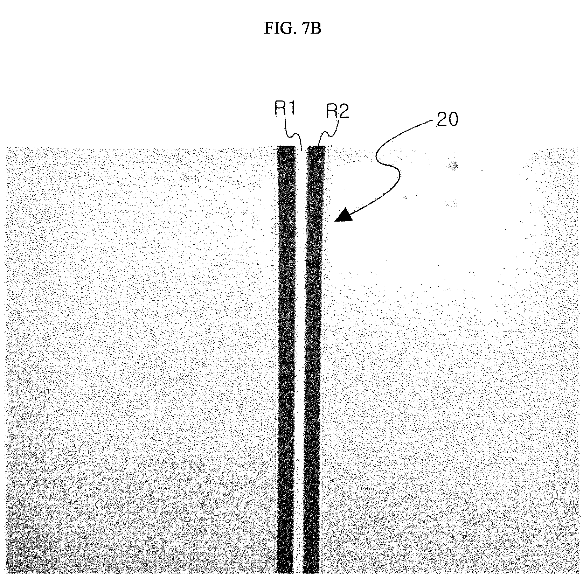

FIG. 6 is a diagram illustrating an image acquisition module and a curing module according to an exemplary embodiment of the present invention. FIG. 7A is a diagram illustrating a process in which light emitted from a lighting module passes through the optical wire and is collected by the image acquisition module. FIG. 7B is an image of the optical wire acquired by the image acquisition module.

Referring to FIG. 6, the image acquisition module 300 and the curing module 200 may be connected to one combination module 400. The combination module 400 may include an integrated housing having a plurality of optical paths, an optical filter 420 disposed in the integrated housing 410, and a second drive module 430 for moving the integrated housing 410.

The integrated housing 410 may include a first spatial portion 411 extending to a certain length from a first surface F1 facing the optical wire 20, a second spatial portion 412 connected to the first spatial portion 411 and accommodating a camera 310, and a third spatial portion 413 connected to the first spatial portion 411 and accommodating a light source 210 of the curing module 200.

The integrated housing 410 may include the optical filter 420 therein which transmits light L1 incident on the camera 310 through the first spatial portion 411 and reflects UV light emitted from the light source 210 to the first surface F1. For example, the optical filter 420 may transmit visible light and reflect UV light. However, the optical filter 420 is not necessarily limited thereto and may be designed to reflect visible light and transmit UV light.

The second drive module 430 may move the integrated housing 410 along a predetermined path. The first drive module 120 may move the solution discharge module 110 along the predetermined path to form the optical wire 20, and the second drive module 430 may move the combination module 400 along the same movement path as the path of the solution discharge module 110 to perform imaging and/or curing.

The image acquisition module 300 may include the camera for capturing an image and a first lens 320 for concentrating light so that an image is input to the camera 310. The configuration of the image acquisition module 300 may further include various devices required for collecting and processing images. The image acquisition module 300 may transmit the collected images to the control module 500.

A lighting module 440 may be disposed on a side opposite to the image acquisition module 300 on the basis of the optical wire 20 to emit illumination light to the optical wire 20. Accordingly, the illumination light transmitted through the image acquisition module 300 may be incident on the image acquisition module 300.

Referring to FIG. 7A, among the illumination light emitted to the optical wire 20, first light L1 incident on a central region R1 of the optical wire 20 may be transmitted through the optical wire 20, whereas second light L2 incident on edge regions R2 of the optical wire 20 may be totally reflected and may not be transmitted through the optical wire 20. Accordingly, in an image acquired by the image acquisition module 300, the edge regions R2 of the optical wire 20 may be displayed in black, and the central region R1 may be displayed in a relatively bright color (e.g., white).

The control module 500 may measure the width of the black regions which are the edge regions R2 in the image acquired by the image acquisition module 300 and determine whether the shape of the optical wire 20 satisfies a predetermined shape condition. For example, when a ratio of the width of the black regions to the width of the white region in the image of the optical wire satisfies a predetermined ratio, it may be determined that the optical wire shape condition is satisfied.

When it is determined that the optical wire 20 is formed in a desired shape at a desired position, the control module 500 may control the curing module 200 so that the optical wire 20 is cured.

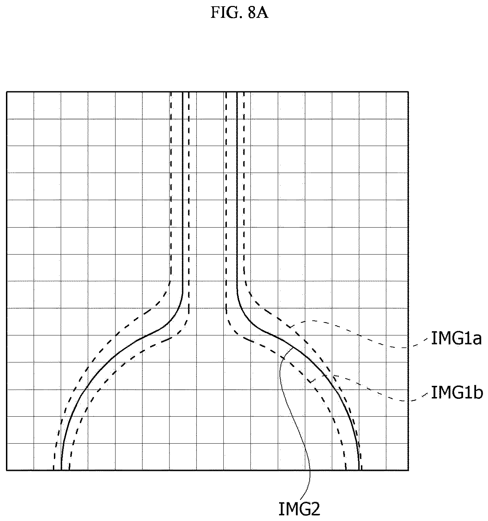

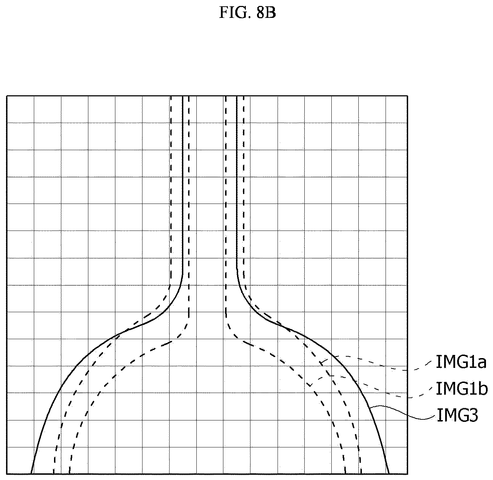

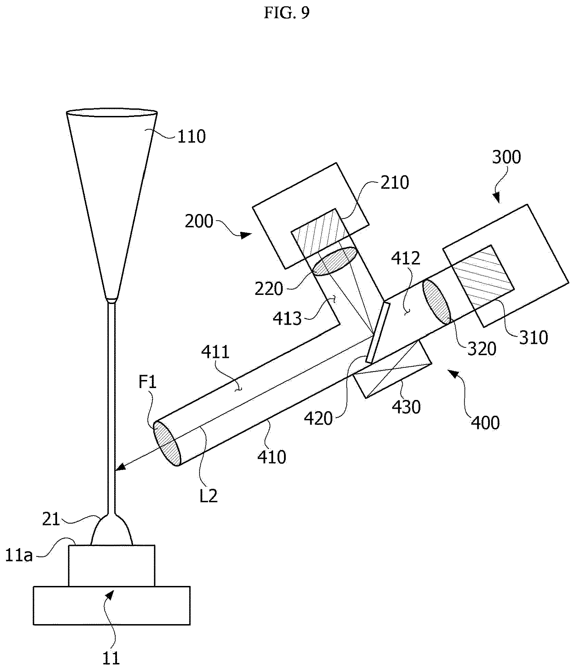

FIG. 8A is a diagram illustrating a process of matching an image acquired by the image acquisition module to a prestored image. FIG. 8B is a diagram illustrating a state in which an image acquired by the image acquisition module does not match a prestored image. FIG. 9 is a diagram illustrating a process of curing the optical wire by emitting UV light to the optical wire.

Referring to FIG. 8A, the control module 500 may compare prestored shape information with actually measured shape information to determine whether the shape of the optical wire 20 matches the prestored shape information. Various image processing technologies may be used for determining whether the shape matches the prestored shape information. In the drawing, a two-dimensional (2D) graph is illustrated, but a three-dimensional (3D) graph may be obtained according to a design technique.

When it is determined that the shape and position information IMG2 of the optical wire 20 match predetermined shape and position information IMG1a and IMG1b, the control module 500 may control the curing module 200 so that the optical wire 20 is cured. FIG. 8A shows an example of determining that the optical wire 20 is normal because the actually measured shape information IMG2 is positioned between the two pieces of prestored shape information IMG1a and IMG1b.

On the other hand, when shape information IMG3 of the optical wire 20 does not match the prestored shape information IMG1a and IMG1b as shown in FIG. 8B, an error message may be output. For example, when a link portion of the optical wire 20 is formed to be flatter than a prestored link portion shape, it may be determined that the shape information IMG3 does not match the prestored shape information IMG1a and IMG1b. Also, when a link portion is formed to be excessively convex, it may be determined that the shape information IMG3 does not match the prestored shape information IMG1a and IMG1b. In this case, it is difficult to perform the function of an optical wire, and thus an alarm signal may be externally output.

Referring to FIG. 9, the curing module 200 may include the light source 210 and a second lens 220. The light source 210 may be a UV LED. However, the light source 210 is not limited thereto, and various UV lamps may be used. The second lens 220 may concentrate light emitted from the light source 210. Accordingly, UV light L2 concentrated through the second lens 220 may be reflected by the optical filter 420 and locally emitted to the optical wire 20.

The second lens 220 may be manufactured so that the concentrated UV light L2 is locally emitted to an optical wire to be cured. Since the UV light is emitted only to the corresponding optical wire, it is possible to prevent a neighboring optical wire from being unintentionally cured.

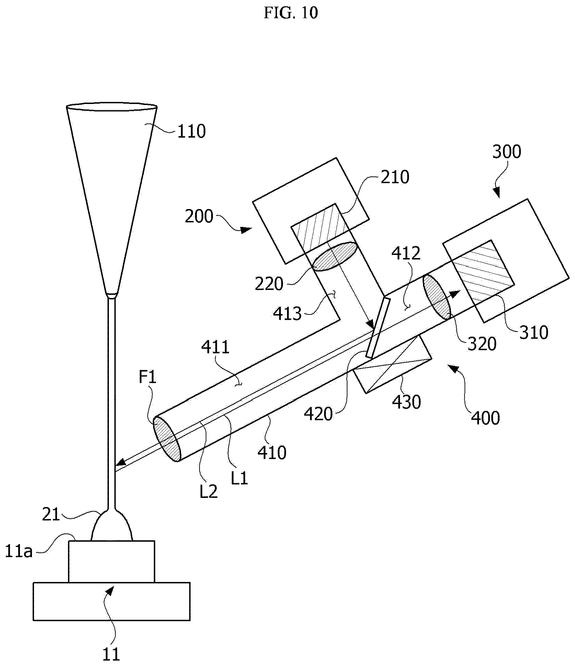

FIG. 10 is a diagram illustrating a state of emitting UV light while acquiring images in real time through a camera.

Referring to FIG. 10, while the integrated housing 410 is moved by the second drive module 430, image acquisition and curing may be simultaneously performed. In other words, the image acquisition module 300 may consecutively acquire images and transmit the images to the control module 500, and the control module 500 may extract position information of the optical wire 20 through image analysis and emit UV light to the corresponding position. According to this configuration, it is possible to acquire images in real time and emit UV light to an accurate position, and thus deformation of the optical wire 20 can be minimized.

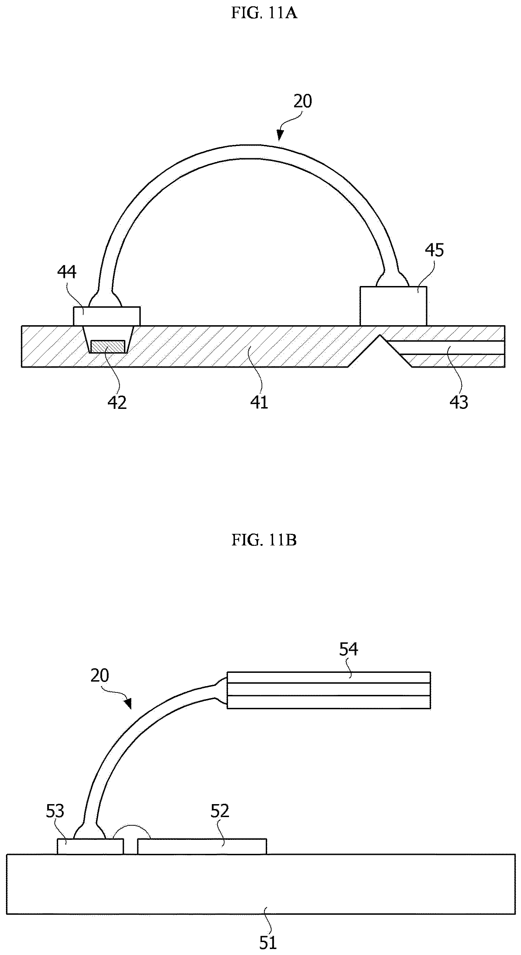

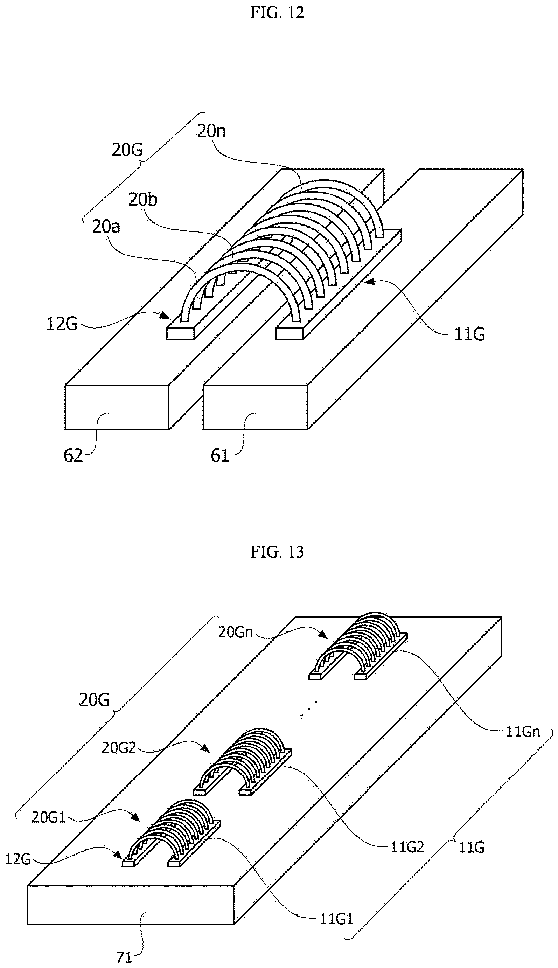

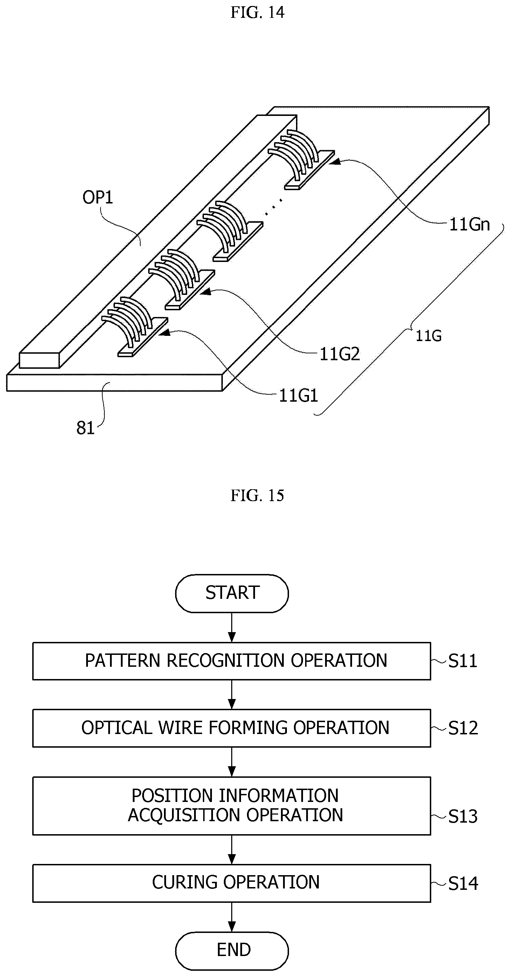

FIG. 11A is a diagram illustrating an optical module in which two optical coupling bodies formed on the same substrate are connected through an optical wire. FIG. 11B is a diagram illustrating an optical module in which an optical device and an optical waveguide receiving or outputting a light signal in different directions are connected through an optical wire. FIG. 12 is a diagram illustrating an optical module in which two multi-channel optical devices formed on two different substrates are connected through a plurality of optical wires. FIG. 13 is a diagram illustrating an optical module in which a plurality of multi-channel optical devices are connected through a plurality of optical wires. FIG. 14 is a diagram illustrating an optical module in which a plurality of multi-channel optical devices are connected to an optical waveguide through a plurality of optical coupling wires.

Referring to FIG. 11A, the optical module includes an optical interposer 41, an optical device 42, an optical waveguide 43, and an optical wire 20.

The optical interposer 41 is a platform which is formed to include a plurality of electronic devices and a plurality of optical devices to help transmission of electric signals and light signals. Here, the electronic devices include various signal processing circuit devices which may be manufactured using chemical or silicon processing technologies, for example, a signal generator, an amplifier, a modulator, a demodulator, a frequency converter, a linearizer, a voltage converter, and the like.

The optical device 42 includes a semiconductor laser diode, a photodiode, an optical modulator, an optical demodulator, an optical multiplexer, an optical demultiplexer, a filter, a reflector, a lens, an optical waveguide, an optical coupler, or the like.

The first optical coupling body 44 is a structure for transmitting a light signal received from the optical device 42 to the optical wire 20 and may be designed in consideration of at least one selected from a geometric feature or a wave-mechanical feature of the light signal received from the optical device 42.

The geometric feature of the light signal includes features represented in two dimensions or three dimensions in consideration of straightness, reflection, refraction, and the like. For example, when the light signal received from the optical device 42 diverges at a specific radiation angle, the diverging light signal may be converged or changed into optical signals traveling in parallel, and then transmitted to the optical wire 20.

Also, the first optical coupling body 44 may be designed in consideration of a wave-mechanical feature of a light signal. For example, the first optical coupling body 44 may include a grating coupler for transmitting the light signal received from the optical device 42 to the optical wire 20.

A second optical coupling body 45 is a structure for transmitting the light signal passing through the optical wire 20 to a preset optical device or the outside of the optical module and may be designed in consideration of both or one selected from a geometric feature or a wave-mechanical feature of the light signal passing through the optical wire 20.

The optical waveguide 43 is formed to include a core and a cladding so that the light signal received from the second optical coupling body 45 may be transmitted to the outside without noise or loss. Here, the core and cladding of the optical waveguide 43 may be designed in consideration of the wavelength of the light signal generated, emitted, or received from the optical device 42.

The optical waveguide 43 may be formed of the same material as the optical wire 20, and an end portion of the optical waveguide 43 coming into close contact with the second optical coupling body 45 may be designed in consideration of features of the light signal received from the second optical coupling body 45.

Referring to FIG. 11B, in the optical module, an optical device 53 and an electronic device 52 may be disposed on a substrate 51, and the electronic device 52 may be a device for driving the optical device 53 at a high speed. Such an electronic device may be a semiconductor integrated circuit (IC).

The optical device 53 may be continuously connected to an optical waveguide 54 through an optical wire 20. According to an exemplary embodiment, even when a first point of the optical device 53 and an incidence surface of the optical waveguide 54 are formed to be perpendicular to each other, the optical device 53 and the optical waveguide 54 may be optically coupled through the optical wire 20.

Referring to FIG. 12, the optical module may include a first substrate 61, a second substrate 62, a first optical device group 11G, a second optical device group 12G, and an optical wire group 20G.

According to an exemplary embodiment, when there are a plurality of optical wires, the process described above with reference to FIGS. 3 to 9 may be repeated. As an example, a first optical wire is formed and cured, and then a second optical wire may be formed. Such a process may be repeated as many times as the number of required wires. Alternatively, a plurality of optical wires may be formed in group units and then cured at the same time.

Referring to FIG. 13, a first optical device group 11G may be divided into a plurality of first unit groups 11G1, 11G2, ..., and 11Gn, and a second optical device group 12G may also be divided into a plurality of second unit groups. An optical wire group 20G may be divided into a plurality of sub-wire groups 20G1, 20G2, ..., and 20Gn according to the number of inputs and outputs of unit groups of the first and second optical device groups 11G and 12G. Also, as shown in FIG. 14, a plurality of first unit groups 11G1, 11G2, ..., and 11Gn of a first optical device group 11G may be connected to an optical waveguide array OP1. In this way, optical wires may be applied to various forms of optical modules without limitations.

FIG. 15 is a flowchart illustrating a method of manufacturing an optical coupling wire according to an exemplary embodiment of the present invention.

Referring to FIGS. 1 to 6 and 15, the method of manufacturing an optical wire includes a pattern recognition operation S11, an operation S12 of forming an optical wire, an operation S13 of acquiring an image of the optical wire, and an operation S14 of curing the optical wire.

The pattern recognition operation S11 may be an operation of finding the positions of the first point 11a and the second point 12a to be connected through the optical wire 20 and setting a setting value to form the optical wire 20 for connecting the first point 11a and the second point 12a.

In the operation S12 of forming an optical wire, first, the solution discharge module 110 may be placed on the first point 11a of the first optical device 11 and then discharge a solution to form the first link portion 21. Subsequently, while continuously discharging the solution, the solution discharge module 110 may vertically ascend to form the line portion 22 and move to the second optical device 12 to form the second link portion 23 at the second point 12a of the second optical device 12.

In the operation S13 of acquiring an image of the optical wire, the shape and position of the optical wire 20 may be checked using the camera 310. Various image processing techniques may be used for extracting the position of an object without limitations.

In the operation S14 of curing the optical wire, UV light may be locally emitted to the optical wire 20 to cure the optical wire 20. Light emitted from the light source 210 may be concentrated through the second lens 220 and locally emitted to the optical wire 20.

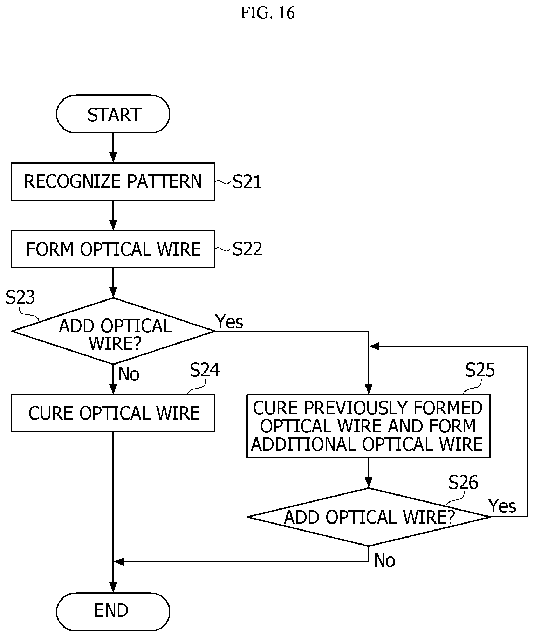

Referring to FIGS. 1 to 6 and 16, a method of manufacturing an optical wire according to another exemplary embodiment of the present invention may include a pattern recognition operation S21, an optical wire forming operation S22, an operation S23 of determining whether it is necessary to additionally form an optical wire, and an operation S25 of forming an additional wire.

The pattern recognition operation S21 may be an operation of finding the positions of a plurality of first points 11a and a plurality of second points 12a to be connected through optical wires and setting a setting value to form a plurality of optical wires 20 for connecting the plurality of first points 11a and the plurality of second points 12a.

According to the exemplary embodiment, since there are the plurality of first points 11a and the plurality of second points 12a, it is possible to determine the positions of the points and calculate paths for forming the optical wires 20 connecting the first points 11a and the second points 12a.

The shape of the optical wires 20 may be determined according to the positions of the plurality of first points 11a and the plurality of second points 12a, and movement path coordinates of the solution discharge module 110 and the combination module 400 may be set according to the shape of the optical wires 20.

In the operation S22 of forming optical wires, the solution discharge module 110 may be placed on the first point 11a of the first optical device 11 and then discharge an optical wire solution to form the first link portion 21. Subsequently, while continuously discharging the solution, the solution discharge module 110 may vertically ascend to form the line portion 22 and move to a second optical device 12 to form the second link portion 23 at the second point 12a of the second optical device 12.

In the operation S23 of determining whether it is necessary to additionally form an optical wire, it may be determined whether all the plurality of first points 11a and all the plurality of second points 12a are connected through the optical wires 20, and an optical wire may be additionally formed when there is an optical device of which optical coupling has not been completed. When coupling of all optical devices has been completed, currently formed optical wires may be cured without forming more optical wires (S24), and then the process may be finished.

In the operation S25 of forming an additional wire, an optical wire may be formed on an optical device to which an optical wire has not yet been connected, and the already-formed optical wires may be cured.

When the operation is completed, it is determined whether it is necessary to form an additional wire (S26), and when there is no more optical wire to be additionally formed, the process is finished.

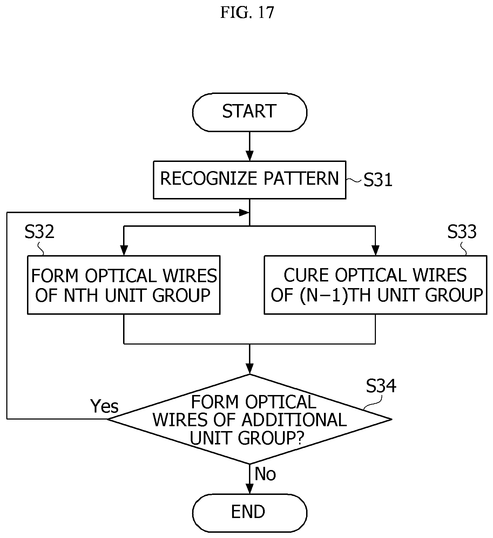

FIG. 17 is a flowchart illustrating a method of manufacturing an optical coupling wire according to still another exemplary embodiment of the present invention.

Referring to FIGS. 13 and 17, the method of manufacturing an optical coupling wire according to this exemplary embodiment includes a pattern recognition operation S31, an operation S32 of forming optical wires of an N^{th} unit group, an operation S33 of curing optical wires of an (N-1)^{th} unit group, and an operation S34 of determining whether it is necessary to additionally form optical wires of a unit group.

In the pattern recognition operation S31, when a plurality of optical devices are manufactured in an array and have multiple outputs, positions to be connected to optical wires may be determined for each unit group, and paths for forming optical wires connecting the unit groups may be calculated.

In the operation S32 of forming optical wires of the N^{th} unit group, optical wires may be formed for each unit group. As an example, a plurality of optical wires may be consecutively formed in a first unit group. The optical wires may be formed by moving the solution discharge module 110.

In the operation S33 of curing the optical wires of the (N-1)^{th} unit group, optical wires formed in a previous unit group may be cured at the same time. As an example, all optical wires of a first unit group may be formed and then cured when optical wires of a second unit group are formed. In other words, forming of optical wires and curing of optical wires may be performed in parallel.

In the operation S34 of determining whether it is necessary to additionally form optical wires of a unit group, it may be determined whether optical wires are formed in all the plurality of unit groups, and optical wires may be additionally formed when optical coupling has not yet been completed in an optical device.

According to exemplary embodiments, an optical wire is cured while the shape and position of the optical wire are checked. Accordingly, the reliability of the optical wire can be increased.

Various advantages and effects of exemplary embodiments are not limited to the foregoing and may be easily understood in the above process of describing specific embodiments of the present invention.

Although exemplary embodiments of the present invention have been mainly described, these are merely illustrative and do not limit the present invention, and those of ordinary skill in the art should know that various modifications and applications not illustrated above can be made without departing from the essential characteristics of the exemplary embodiments. For example, each component specified in an embodiment can be implemented in a modified form. In addition, differences of the modifications and applications are construed as falling within the scope of the present invention defined in the following claims.

## Claims

1. An apparatus for manufacturing an optical wire, the apparatus comprising:
a wire forming module configured to form an optical wire for optically coupling a first point to a second point;
an image acquisition module configured to acquire an image of the optical wire;
a curing module configured to cure the optical wire; and
a control module,
wherein the control module checks a shape and position of the optical wire through the image acquired by the image acquisition module and outputs a control signal to the curing module so that ultraviolet (UV) light is emitted to the optical wire.

2. The apparatus of claim 1, wherein the wire forming module comprises:
a solution discharge module; and
a first drive module configured to move the solution discharge module,
wherein the solution discharge module discharges a polymer solution on the first point and then is moved to the second point by the first drive module to form the optical wire between the first point and the second point.

3. The apparatus of claim 2, wherein the optical wire comprises:
a first link portion formed at the first point;
a second link portion formed at the second point; and
a line portion connected between the first link portion and the second link portion.

4. The apparatus of claim 3, wherein the solution discharge module forms the first link portion by discharging the polymer solution on the first point, forms the line portion thinner than the first link portion while moving to the second point, and forms the second link portion at the second point.

5. The apparatus of claim 3, wherein the image acquisition module comprises a camera configured to acquire shape information of the first link portion, the line portion, and the second link portion.

6. The apparatus of claim 5, wherein the control module determines whether the shape information of the optical wire acquired through the camera matches predetermined shape range and position information in a memory.

7. The apparatus of claim 5, wherein the image acquisition module and the curing module are combined as a combination module,
the combination module moves the image acquisition module and the curing module along a predetermined path,
the image acquisition module acquires the shape information of the optical wire while moving along the predetermined path, and
the curing module cures the optical wire while moving along the predetermined path.

8. The apparatus of claim 7, wherein the combination module comprises:
an integrated housing including a first spatial portion extending to a certain length from a first surface facing the optical wire, a second spatial portion connected to the first spatial portion and accommodating the camera, and a third spatial portion connected to the first spatial portion and accommodating a light source of the curing module;
an optical filter configured to reflect or transmit light incident on the camera through the first spatial portion and reflect or transmit light emitted from the light source to the first surface; and
a second drive module configured to move the integrated housing along the predetermined path.

9. A method of manufacturing an optical wire, the method comprising:
forming an optical wire between a first point and a second point;
acquiring shape information and position information of the optical wire; and
emitting ultraviolet (UV) light to the optical wire to cure the optical wire.

10. The method of claim 9, wherein the optical wire is simultaneously inspected and cured while a camera and a light source move together in a longitudinal direction of the optical wire.
